# EUROPÄISCHE PATENTSCHRIFT

(11) **EP 2 059 378 B1**
(45) Veröffentlichungstag und Bekanntmachung des Hinweises auf die Patenterteilung: **15.09.2010**
(21) Anmeldenummer: 07785542.7
(22) Anmeldetag: 22.06.2007
(51) Int. Cl.: B29C 47/68

(54) **VORRICHTUNG ZUM FILTRIEREN EINER THERMOPLASTISCHEN KUNSTSTOFFSCHMELZE**
DEVICE FOR FILTERING A THERMOPLASTIC POLYMER MELT
DISPOSITIF DE FILTRATION DE MATIÈRE SYNTHÉTIQUE THERMOPLASTIQUE FONDUE

(30) Priorität: 29.08.2006 DE 102006040321; 14.12.2006 DE 102006059523; 29.01.2007 DE 102007005204
(43) Veröffentlichungstag der Anmeldung: 20.05.2009
(73) Patentinhaber: Maag Pump Systems GmbH, 34131 Kassel (DE)
(72) Erfinder: POHL, Harald, 48477 Hörstel (DE)
(74) Vertreter: Lau-Loskill, Philipp
(86) Internationale Anmeldenummer: PCT/DE2007/001108
(87) Internationale Veröffentlichungsnummer: WO 2008/025310

(56) Entgegenhaltungen:
- WO-A-02/06028
- DE-A1- 19 541 741
- DE-A1- 19 649 013
- DE-C1- 4 125 181
- GB-A- 1 235 322

## Beschreibung

Die vorliegende Erfindung betrifft eine Vorrichtung zum Filtrieren einer thermoplastischen Kunststoffschmelze mit den Merkmalen des Oberbegriffs des Patentanspruchs 1 bzw. des Patentanspruchs 2.

Vorrichtungen zum Filtrieren einer thermoplastischen Kunststoffschmelze sind in verschiedenen Ausgestaltungen bekannt, siehe z.B. das Dokument DE 41 25 181 C1. So beschreibt beispielsweise die DE 40 12 404 C eine entsprechende Vorrichtung zum Filtrieren einer thermoplastischen Kunststoffschmelze, wobei die bekannte Vorrichtung ein Gehäuse aufweist, das mit einem Eintrittskanal für die zu filtrierende Kunststoffschmelze und einen Austrittskanal für die filtrierte Kunststoffschmelze versehen ist. Zwischen dem Eintrittskanal und dem Austrittskanal sind zwei senkrecht zu den Kanälen verlaufende zylindrische Bohrungen vorgesehen, die jeweils zur Aufnahme eines axial verschiebbaren Bolzens dienen. Während des Filtriervorganges der Kunststoffschmelze fluchtet eine in jedem Bolzen vorgesehene Durchtrittsöffnung mit dem Eintrittskanal und dem Austrittskanal, wobei innerhalb der Durchtrittsöffnung ein quer zur Strömungsrichtung angeordnetes Filterelement gehaltert ist, das mit einem Flachfilter, das auch üblicherweise als Sieb bezeichnet wird, ausgestattet ist.

Eine Vorrichtung mit den Merkmalen des Oberbegriffs des Patentanspruchs 1 ist aus der DE 2 315 344 A bekannt, wobei sich diese bekannte gattungsbildende Vorrichtung von der zuvor beschriebenen Vorrichtung im Wesentlichen dadurch unterscheidet, daß das flache Filter bzw. das Sieb bei der aus der DE 2 315 344 A bekannten Vorrichtung durch eine Vielzahl von Filterkerzen ersetzt ist, die in axiale Verschieberichtung des Bolzens und senkrecht hierzu in Reihen positioniert sind. Die zu filtrierende Kunststoffschmelze wird dabei über den Eintrittskanal zugeführt, tritt hiernach in die im Bolzen vorgesehene Durchtrittsöffnung ein und wird mittels der dort positionierten Filterkerzen gefiltert, wobei jede Filterkerze von außen nach innen von der Kunststoffschmelze durchströmt wird, so daß hiernach aus dem Inneren der Filterkerze die dann filtrierte Kunststoffschmelze über den Austrittskanal abgeführt und somit als filtrierte Kunststoffschmelze einem stromab der Vorrichtung beispielsweise angeordnetem Werkzeug oder einer Düse zugeführt wird.

Bei der zuvor beschriebenen und aus der DE 2 315 344 A bekannten Vorrichtung weisen alle Filterkerze eine identische axiale Länge auf, so daß hier ein beträchtlicher Abstand zwischen den Kopfflächen der Filterkerzen und dem zugehörigen Abschnitt der Krümmungslinie der Bohrung im Gehäuse besteht. Dies wiederum hat den Nachteil, daß hier ein erhebliches, nicht von Filterflächen eingenommenes Totvolumen ausgebildet ist, wobei die Fachwelt dieses Totvolumen für erforderlich hält, um eine einwandfreie und insbesondere auch gleichmäßige An- bzw. Durchströmung aller Filterkerzen zu gewährleisten.

Der vorliegenden Erfindung liegt die Aufgabe zugrunde, eine Vorrichtung zum Filtrieren einer thermoplastischen Kunststoffschmelze zur Verfügung zu stellen, bei der ein besonders gleichmäßiges Anströmen aller Filterkerzen gewährleistet ist.

Diese Aufgabe wird erfindungsgemäß durch eine Vorrichtung mit den kennzeichnenden Merkmalen des Patentanspruchs 1 bzw. durch eine Vorrichtung mit den Kennzeichnenden Merkmalen des Patentanspruchs 2 gelöst.

Vorteilhafte Weiterbildungen der erfindungsgemäßem Vorrichtung sind in dem Unteransprüchen Angegeben.

Die erfindungsgemäße Vorrichtung zum Filtrieren einer thermoplastischen Kunststoffschmelze weist ein Gehäuse auf, das mit einem Eintrittskanal für die zu filtrierende Kunststoffschmelze und einem Austrittskanal für die filtrierte Kunststoffschmelze versehen ist. Der Eintrittskanal ist von dem Austrittskanal bei der erfindungsgemäßen Vorrichtung durch mindestens eine senkrecht zu diesen Kanälen verlaufende zylindrische Bohrung abgetrennt, wobei innerhalb der zylindrischen Bohrung ein axial verschiebbarer Bolzen positioniert ist. Hierbei ist der Bolzen derart präzise innerhalb der zylindrischen Bohrung angeordnet, daß er ohne zusätzliche Dichtmittel auch bei einer axialen Verschiebung verhindert, daß sich zwischen der Außenwandung des Bolzens und der inneren Wandung der zylindrischen Bohrung in unerwünschter Weise Kunststoffschmelze durchdrückt. Der Bolzen ist desweiteren mindestens mit einer Durchtrittsöffnung zur Aufnahme von mindestens einem, aus einer Vielzahl von Filterkerzen bestehenden Filterelement versehen, wobei die Filterkerzen in Verschieberichtung des Bolzens und senkrecht hierzu in ersten Reihen angeordnet und in Strömungsrichtung der Kunststoffschmelze axial gesehen ausgerichtet sind, derart, daß die zu filtrierende Kunststoffschmelze die Filterkerzen von außen anströmen, so daß der in der Kunststoffschmelze vorhandene Schmutz beim Passieren der Kunststoffschmelze durch den Mantel und ggf. durch die Kopffläche der Filterkerzen abfiltriert wird, so daß hiernach aus dem Inneren der Filterkerze eine filtrierte Kunststoffschmelze das Filterelement verläßt. Im Unterschied zu der zuvor beschriebenen gattungsbildenden bekannten Vorrichtung sind bei der erfindungsgemäßen Vorrichtung in Verschieberichtung des Bolzens gesehen die axialen Längen aller Filterkerzen einer ersten Reihe identisch und desweiteren senkrecht zur Verschieberichtung des Bolzens gesehen die axialen Längen aller Filterkerzen einer zweiten Reihe an die Krümmungslinie der Bohrung derart angepaßt, daß zwischen den Kopfflächen der Filterkerzen und dem zugehörigen Abschnitt der Krümmungslinie der Bohrung ein minimierter Abstand ausgebildet ist. Mit anderen Worten ist somit der sich zwischen der im Bolzen vorgesehenen Durchtrittsöffnung und dem entsprechenden Abschnitt der Innenwandung der Bohrung ausbildende tunnelförmige Raum durch die Anpassung der axialen Länge der Filterkerzen bei der erfindungsgemäßen Vorrichtung maximal mit Filterkerzen ausgefüllt, so daß die zuvor beim Stand der Technik beschriebenen Toträume bei der erfindungsgemäßen Vorrichtung nicht oder nur in einem erheblich verringertem Maße bestehen.

Überraschend konnte festgestellt werden, daß trotz Eliminierung oder Minimierung des Totraumvolumens bei der erfindungsgemäßen Vorrichtung alle Filterkerzen gleichmäßig angeströmt und somit auch im Laufe der Benutzung gleichmäßig mit abzufiltrierenden Schmutzaggregaten belegt werden, so daß dementsprechend bei einem Austausch oder einer Regenerierung der Filterkerzen bei der erfindungsgemäßen Vorrichtung keine Filterkerzen festgestellt werden konnten, die stärker mit Schmutzaggregaten belegt waren als hiervon benachbarte Filterkerzen. Dies wiederum führt zu dem entscheidenden Vorteil, daß bei der erfindungsgemäßen Vorrichtung nicht nur die zur Verfügung stehenden Filterflächen im Vergleich zu der gattungsbildenden bekannten Vorrichtung erheblich, so insbesondere zwischen 20 % und 80 %, vergrößert ist, so daß dementsprechend bei der erforderlichen Reinigung der Filterkerzen bei der erfindungsgemäßen Vorrichtung im Vergleich zur herkömmlich bekannten Vorrichtung eine deutlich verlängerte Betriebszeit ermöglicht wird sondern daß auch wenn bei der erfindungsgemäßen Vorrichtung ein Austausch bzw. eine Regenerierung der Filterkerzen in Folge der Verschmutzung der Filterflächen erforderlich wird, gleichmäßig angeschmutzte Filterkerzen vorliegen. Von daher zeichnet sich die erfindungsgemäßen Vorrichtung insbesondere durch eine längere Betriebszeit und durch gleichmäßig angeschmutzte Filterkerzen aus, so daß die erfindungsgemäßen Vorrichtung besonders wirtschaftlich und mit erheblich reduziertem Personalaufwand bei gleichmäßiger Filtrierleistung und identischem rheologischem Verhalten der filtrierten Kunststoffschmelze zu betreiben ist. Wegen der bereits zuvor beschriebenen Minimierung des Totraumvolumens und des überraschenderweise gleichmäßigen Anströmens aller Filterkerzen verhindert die erfindungsgemäße Vorrichtung besonders wirksam, daß in diesem Totraumvolumen unerwünschte Ablagerungen, beispielsweise von Schmutzaggregaten oder gecrackter Kunststoffschmelze, stattfinden, was wiederum zu einer besonders störungsfreien Betriebsweise der erfindungsgemäßen Vorrichtung führt.

Die zuvor beschriebenen Vorteile der erfindungsgemäßen Vorrichtung treten insbesondere bei Großflächenfiltern auf, bei denen der Bolzendurchmesser zwischen 400 mm und 800 mm, die Kerzenanzahl zwischen 30 Filterkerzen und 80 Filterkerzen, die axialen Längen der Filterkerze, abhängig von ihrer Position, zwischen 150 mm und 600 mm, die Filterkerzendurchmesser zwischen 50 mm und 100 mm und dementsprechend die Filterflächen zwischen 1,5 m² und 15 m² variieren, wobei sich diese Angaben auf ein einziges Filterelement beziehen.

Es ist festzuhalten, daß die in der erfindungsgemäßen Vorrichtung eingesetzten Filterkerzen vorzugsweise zylindrische oder überwiegend zylindrische Filterkerzen sind, die insbesondere auch einen einheitlichen Durchmesser besitzen, so daß vorzugsweise ein Filterelement aus einer Vielzahl von zylindrischen Filterkerzen mit identischem Durchmesser ausgebildet wird. In besonderen Fällen ist es jedoch auch möglich, daß zur weiteren Optimierung der zur Verfügung stehenden Filterflächen solche Filterelemente in der erfindungsgemäßen Vorrichtung vorgesehen sind, deren Filterkerzen gruppen- oder reihenweise identische und gruppen- oder reihenweise unterschiedliche Durchmesser aufweisen.

Wie bereits zuvor bei der erfindungsgemäßen Vorrichtung dargelegt, ist der Abstand der Kopfflächen der Filterkerzen und der zugehörige Abschnitt der Krümmungslinie der Bohrung minimiert, wobei insbesondere hier die Filterkerzen derart angeordnet und bezüglich ihrer axialen Länge ausgerichtet werden, daß dieser Abstand zwischen 2 mm und 0,5 mm beträgt.

Die erfindungsgemäße Vorrichtung sieht vor, daß hierbei allen Kopfflächen der Filterkerzen eine gemeinsame Abschlußplatte zugeordnet ist, die mit Bohrungen versehen ist. Hierbei bewirkt diese Abschlußplatte, daß gezielt die zu filtrierende Kunststoffschmelze mit Hilfe der Bohrungen auf die Vielzahl der Filterkerzen verteilt wird, wobei in Weiterbildung dieser Ausgestaltung dann die gemeinsame Abschlußplatte vorzugsweise mit solchen Bohrungen versehen ist, die einen unterschiedlichen Durchmesser aufweisen. Dies verhindert, daß sich in unerwünschter Weise laminare Strömungsbereiche beim Anströmen der Filterkerzen ausbilden, wodurch wiederum die Zufuhr der zu filtrierenden Kunststoffschmelze zu der Vielzahl der Filterkerzen vergleichmäßigt wird. Desweiteren beinhaltet diese gemeinsame Abschlußplatte den Vorteil, daß das Totraumvolumen hierdurch weiter verringert wird, was, wie bereits zuvor beschrieben, erhebliche rheologische Vorteile hat und wirksam unerwünschte Ablagerungen verhindert. Desweiteren beinhaltet die zuvor beschriebene Abschlußplatte den Vorteil, daß hierdurch überprüft werden kann, ob jede Filterkerze eines Filterelementes an der richtigen Stelle positioniert ist. Um die richtige Positionierung aller Filterkerzen zu überprüfen, besteht die Möglichkeit, eine alternative Abschlußplatte zu verwenden, die lediglich als Kontrollschablone dann kurzfristig angewandt wird, wenn unbeladene Filterkerzen neu positioniert werden. Nach Überprüfung mit Hilfe dieser speziell geformten Kontrollschablone wird diese entfernt, so daß während des Filtrierens keine Abschlußplatte vorgesehen ist.

Um bei der erfindungsgemäßen Vorrichtung eine einwandfreie und sichere Positionierung der Filterkerzen auch über einen weiten Betriebszeitraum zu gewährleisten, sieht eine andere Ausführungsform der erfindungsgemäßen Vorrichtung vor, daß hierbei die Filterkerzen auf einer senkrecht zur Strömungsrichtung der Kunststoffschmelze angeordneten Halterungsplatte positioniert sind, die mit Durchtrittsöffnungen für die Kunststoffschmelze versehen ist. Durch Ausgestaltung der Halterungsplatte und/oder durch Variation der Größe und/oder der Form der Durchtrittsöffnungen für die filtrierte Kunststoffschmelze in der Halterungsplatte lassen sich bei der erfindungsgemäßen Vorrichtung die rheologischen Bedingungen beeinflussen und optimieren, was insbesondere dann wichtig ist, wenn die erfindungsgemäße Vorrichtung als Großflächenfilter, wie dieses vorstehend quantifiziert ist, ausgebildet wird.

Um bei der erfindungsgemäßen Vorrichtung ein Austausch aller Filterkerzen eines Filterelementes zu erleichtern, sieht eine Weiterbildung der zuvor beschriebenen Ausführungsformen vor, daß hierbei die Halterungsplatte mit der Abschlußplatte lösbar verbunden ist. Bei einem Austausch eines derartigen Filterelementes wird dann das gesamte Paket der Filterkerzen eines Filterelementes nach axialer Verschiebung des Bolzens in einen Bereich außerhalb des Gehäuses mittels einer geeigneten Hebeeinrichtung oder einer entsprechenden pneumatischen oder hydraulischen Einrichtung der Durchtrittsöffnung entnommen und durch ein entsprechendes Filterelement, dessen Filterkerzen noch nicht mit Schmutz beladen sind, ausgetauscht, so daß diese Weiterbildung der erfindungsgemäßen Vorrichtung wirksam die für einen Wechsel der Filterelemente erforderliche Stillstandszeit erheblich reduziert. Ist zudem noch bei dieser Ausführungsform der Halterungsplatte ein Arretierungselement zugeordnet, das mit einem entsprechenden Gegenstück, das im Bereich der Durchtrittsöffnung positioniert ist, zusammenwirkt, so erlaubt diese Ausgestaltung besonders wirksam, daß ein derartig ausgestaltetes Filterelement stets richtig innerhalb der Durchtrittsöffnung positioniert werden kann, so daß es bei einer axialen Verschiebung nicht zu einer Beschädigung des Bolzens und/oder der Bohrungswandung kommt.

Insbesondere ist die Halterungsplatte derart ausgestaltet, daß sie unterschiedlich ausgebildete Befestigungselemente für die Filterkerzen aufweist, so daß sie wirkungsvoll verhindert, daß auf der Halterungsplatte Filterkerzen an der falschen Position angeordnet werden. Dies setzt natürlich voraus, daß die Filterkerzen fußseitig so gestaltet sind, daß nur bestimmte Filterkerzen mit einer vorgegebenen axialen Länge an einer bestimmten Stelle auf der Halterungsplatte fixiert werden können.

Bei der erfindungsgemäßen Vorrichtung ist anstelle der zuvor beschriebenen einzigen Abschlußplatte jede Filterkerze mit einem, der Kopffläche zugeordneten Abschlußelement versehen. Dieses individuelle Abschlußelement kann, abhängig von der jeweiligen Größe der Durchtrittsöffnung und der axialen Länge der Filterkerzen individuell unter dem Gesichtspunkt der Beeinflussung und Optimierung der rheologischen Verhältnisse der zugeführten und zu filtrierenden Kunststoffschmelze ausgestaltet werden und dient desweiteren dazu, das unerwünschte Totraumvolumen weiter zu verringern. Unter diesem Gesichtspunkt ist das Abschlußelement konisch oder konusartig ausgestaltet, da durch Variation des Konuswinkels besonders einfach eine erwünschte Beeinflussung der rheologischen Verhältnisse herbeigeführt werden kann.

Bezüglich der Ausgestaltung der im Bolzen vorgesehenen Durchtrittsöffnung, die abhängig von der Bolzenstärke eine axiale Ausdehnung besitzt und das Filterelement aufnimmt und haltert, bestehen mehrere Möglichkeiten.

So schlägt die erste Möglichkeit der erfindungsgemäßen Vorrichtung vor, daß hierbei die Durchtrittsöffnung im Bolzen einen polygonen Querschnitt aufweist. Hierbei deckt der Begriff polygon insbesondere konvexe Polygone ab, wobei allgemein gesprochen die Zahl der Ecken des Polygons davon abhängt, welchen Durchmesser der Bolzen aufweist und welchen Durchmesser die jeweils zu verwendenden Filterkerzen besitzen, so daß unter Berücksichtigung eines optimierten Strömungsverhaltens ein Maximum an Filterkerzen innerhalb der polygon geformten Durchtrittsöffnung angeordnet werden kann. Insbesondere weist die Durchtrittsöffnung bei dieser ersten Möglichkeit im Querschnitt der Durchtrittsöffnung und somit in Strömungsrichtung der zu filtrierenden thermoplastischen Kunststoffschmelze gesehen eine viereckige bis zehneckige, vorzugsweise konvexe, Form auf. Klarstellend ist anzumerken, daß der Begriff polygon nicht nur Vielecke bezeichnet, die im streng mathematischen Sinne Ecken enthalten, sondern auch solche Ausgestaltungen abdeckt, die als polygon-ähnlich zu bezeichnen sind und somit keine Ecken im streng mathematischen Sinne sondern entsprechend abgerundete Ecken aufweisen.

Bedingt dadurch, daß die im Bolzen vorgesehene Durchtrittsöffnung abhängig von dem jeweiligen Bolzendurchmesser eine derart an den Bolzendurchmesser angepaßte axiale Länge aufweist, daß sie sich vollständig durch den Bolzen erstreckt, kann die zuvor beschriebene polygone Durchtrittsöffnung über ihre gesamte axiale Länge durchgehend polygon ausgebildet sein. Bei einer unter Strömungsgesichtspunkten besonders geeigneten Weiterbildung der zuvor beschriebenen ersten Möglichkeit ist jedoch die polygone Durchtrittsöffnung derart ausgestaltet, daß sie in einem ersten, zum Eintrittskanal hin weisenden Abschnitt polygon ausgebildet ist und daß sich stromab des Filterelementes ein zweiter Abschnitt der Durchtrittsöffnung anschließt, in dem diese polygone Durchtrittsöffnung dann in eine runde Durchtrittsöffnung einmündet. Wird bei dieser Weiterbildung die zu filtrierende thermoplastische Kunststoffschmelze über einen im Querschnitt runden Eintrittskanal zugeführt, der endseitig in die polygone Durchtrittsöffnung einmündet, findet in diesem Einmündungsbereich eine Verwirbelung der strömenden Kunststoffschmelze statt, mit der Folge, daß sich hier eine turbulente Strömung ausbildet, die eine besonders gleichmäßige Versorgung aller Filterkerzen gewährleistet. Stromab des Filterelementes bewirkt dann der zuvor beschriebene Übergang von der polygonen Form auf die runde Form im Bereich des zweiten Abschnittes, daß die Strömung der nunmehr filtrierten Kunststoffschmelze beruhigt wird, so daß über den Austrittskanal eine gleichmäßige und kontinuierliche Strömung an Kunststoffschmelze dem nach der Filtriervorrichtung angeordneten Werkzeug bzw. der Düse zugeführt wird.

Dieser zuvor angesprochene Vorteil tritt insbesondere dann auf, wenn der Durchmesser der im zweiten Abschnitt vorgesehenen runden Durchtrittsöffnung identisch ist mit dem Durchmesser des Einmündungsbereiches des Austrittskanals.

Bei einer besonders geeigneten Weiterbildung der zuvor beschriebenen ersten Möglichkeit ist die polygone Durchtrittsöffnung im Querschnitt als regelmäßiges Sechseck ausgebildet. Diese Weiterbildung überzeugt durch die Tatsache, daß aufgrund der Ausgestaltung des Querschnittes der Durchtrittsöffnung hier ein Maximum an Filterkerzen angeordnet werden kann, wobei trotz dieser maximalen Beladung mit Filterkerzen jede einzelne Filterkerze mit einem optimalen Kunststoffschmelzestrom beaufschlagt wird, mit der Folge, daß nach Ablauf einer entsprechenden Betriebszeit alle Filterkerzen gleichmäßig mit abfiltrierter Verschmutzung beladen sind. Klarstellend ist anzumerken, daß die Bezeichnung regelmäßiges Sechseck nicht nur solche konvexen Sechsecke abdeckt, bei denen die Winkel und die Seitenlängen identisch sind, sondern auch solche Sechsecke bezeichnet, die identische Winkel sowie vier identisch lange Seiten und ferner zusätzlich noch zwei identisch lange Seiten besitzen, wobei die Länge der vier Seiten unterschiedlich ist von der Länge der zwei Seiten, wie dies nachfolgend noch bei einem Ausführungsbeispiel beschrieben wird.

Die zweite Möglichkeit der erfindungsgemäßen Vorrichtung schlägt vor, daß hierbei die Durchtrittsöffnung, die im Bolzen vorgesehen ist, als runde und somit zylindrische Durchtrittsöffnung ausgestaltet ist.

Soll hingegen bei einem vorgegebenen Bolzendurchmesser im Vergleich zu der zuvor beschriebenen zweiten Möglichkeit die Anzahl der in einem Filterelement vorgesehenen Filterkerzen vergrößert werden, so sieht die dritte Möglichkeit vor, daß die Durchtrittsöffnung im Bolzen oval ausgestaltet ist, während die vierte Ausgestaltung der Form der Durchtrittsöffnung vorsieht, daß hierbei diese Durchtrittsöffnung sich aus zwei, teilweise überdeckenden runden Durchtrittsöffnungen ausgestaltet ist. Hierbei ist desweiteren darauf hinzuweisen, daß sich die zuvor beschriebenen vier Möglichkeiten der Ausgestaltung der im Querschnitt unterschiedlich geformten Durchtrittsöffnungen danach richtet, wie der Grad der Verschmutzung der zu filtrierenden Kunststoffschmelze ist und insbesondere, welche rheologischen Probleme die jeweils zu filtrierende Kunststoffschmelze bereitet.

Eine Weiterbildung der zuvor beschriebenen Ausgestaltungen, bei denen die Durchtrittsöffnung im Bolzen oval ausgestaltet ist oder aus zwei, sich teilweise überdeckenden runden Durchtrittsöffnungen ausgebildet wird, sieht vor, daß diese Durchtrittsöffnungen im Bolzen über den Querschnitt des Bolzens gesehen in einem ersten Abschnitt dementsprechend oval oder aus zwei sich teilweise überdeckenden runden Durchtrittsöffnungen ausgebildet ist und daß sich hieran stromab des Filterelementes ein zweiter Abschnitt der Durchtrittsöffnung anschließt, der als runder Kanal ausgestaltet ist. Der Durchmesser dieses runden Kanals wird insbesondere an den Durchmesser des hieran angrenzenden Bereiches des Austrittskanals angepaßt, so daß nahtlos der im Bolzenabschnitt vorgesehene Kanal in den entsprechenden Bereich des Austrittskanals mündet.

Bereits zuvor wurde dargelegt, daß das Filterelement nach einer vorgegebenen oder individuell festgestellten Betriebszeit ausgetauscht werden muß. Um diesen Austausch zu bewirken, besteht zunächst bei der erfindungsgemäßen Vorrichtung grundsätzlich die Möglichkeit, daß die Vorrichtung durch eine axiale Verschiebung des Bolzens deaktiviert wird, so daß zu diesem Zeitpunkt keine Kunststoffschmelze mehr filtriert wird und das Filterelement in eine Position gebracht wurde, in dem es von außen zugänglich ist. Dementsprechend weist diese Ausführungsform der erfindungsgemäßen Vorrichtung ein Gehäuse mit einem einzigen Eintrittskanal, einem einzigen Austrittskanal, einer einzigen zylindrischen Bohrung zur axial verschiebbaren Lagerung von einem einzigen Bolzen auf, wobei der Bolzen seinerseits mit einer einzigen Durchtrittsöffnung zur Aufnahme eines einzigen Filterelementes versehen ist.

Besonders vorteilhaft ist es jedoch, wenn der mindestens eine zylindrische Bolzen mit zwei, mit axialen Abstand voneinander angeordneten Durchtrittsöffnungen jeweils zur Aufnahme von einem Filterelement versehen ist, wobei in einer ersten Stellung des Bolzens die Filterkerzen von beiden Filterelementen mit der zu filtrierenden Kunststoffschmelze durchströmt werden und in einer zweiten Stellung des Bolzens die Filterkerzen von einem Filterelement mit der zu filtrierenden Kunststoffschmelze durchströmt werden, während gleichzeitig sich die Filterkerzen des anderen Filterelementes in einer Position außerhalb des Gehäuses der Vorrichtung befindet, so daß dieses Filterelement dann gegen ein solches Filterelement ausgetauscht werden kann, das mit frischen Filterkerzen, d.h. solchen Filterkerzen, die bisher am Filtrierprozeß noch nicht involviert waren, versehen ist. Um eine derartige zweite Stellung zu erreichen, ist es erforderlich, den Bolzen von der ersten Stellung in die zweite Stellung axial zu verschieben.

Eine Variation der zuvor beschriebenen Ausführungsform der erfindungsgemäßen Vorrichtung sieht vor, daß hierbei in der ersten Stellung des Bolzens sich beide Filterelemente nicht in der Filtrierstellung befinden sondern nur ein einziges Filterelement, während das andere Filterelement nicht mit der Kunststoffschmelze beaufschlagt wird. Vielmehr befindet sich dieses Filterelement in einer Position, in der es außerhalb des Gehäuses angeordnet ist. Diese Variante wird insbesondere dann angewendet, wenn die jeweils zu filtrierende Kunststoffschmelze insbesondere auf Druckschwankungen und/oder erhöhtem Druck besonders empfindlich reagiert.

Bei einer anderen Ausgestaltung der erfindungsgemäßen Vorrichtung weist diese mindestens zwei, innerhalb eines Gehäuses angeordnete und axial hierzu verschiebbare Bolzen auf, die jeweils mit mindestens zwei, mit axialem Abstand voneinander angeordnete Filterelemente versehen sind. In einer ersten Stellung der beiden Bolzen werden die Filterkerzen aller Filterelemente mit der zu filtrierenden Kunststoffschmelze durchströmt. In einer zweiten Stellung von einem der beiden Bolzen befindet sich ein Filterelement in einer Position außerhalb des Gehäuses der Vorrichtung, so daß es dementsprechend gegen ein frisches Filterelement ausgetauscht wird, während gleichzeitig die Filterkerzen der anderen verbleibenden Filterelemente von der zu filtrierenden Kunststoffschmelze durchströmt werden. Um die erste bzw. zweite Stellung der Bolzen zu erreichen, sind diese axial verschiebbar angeordnet. Mit dieser Ausgestaltung der erfindungsgemäßen Vorrichtung ist es möglich, 75 % der maximalen Filtrierkapazität auch dann aufrecht zu erhalten, wenn sich ein Filterelement außerhalb des Gehäuses befindet und somit dieses Filterelement durch ein frisches Filterelement ausgetauscht wird.

Die zuvor beschriebenen Ausgestaltungen der erfindungsgemäßen Vorrichtung sehen vor, daß hierbei die Filterelemente dann ausgetauscht werden, wenn die Filterkerzen mit Schmutzaggregaten beladen sind und somit ein Austausch erforderlich wird.

Bei einer prinzipiell anderen Ausführungsform der erfindungsgemäßen Vorrichtung umfaßt diese mindestens einen zylindrischen Bolzen, der mit zwei, mit axialem Abstand voneinander angeordneten Durchtrittsöffnungen jeweils zur Aufnahme von einem Filterelement versehen ist. In einer ersten Stellung des Bolzens werden die Filterkerzen von beiden Filterelementen mit der zu filtrierenden Kunststoffschmelze durchströmt. Durch eine axiale Verschiebung wird der Bolzen dann in eine zweite Stellung überführt, sobald feststeht, daß die Filterkerzen eines Filterelementes nahezu vollständig mit Schmutzaggregaten beladen sind, wobei in der zweiten Stellung des mindestens einen Bolzens die Filterkerzen des einen Filterelementes mit der zu filtrierenden Kunststoffschmelze durchströmt werden, während gleichzeitig die Filterkerzen des anderen Filterelementes mit filtrierter Kunststoffschmelze rückgespült, d.h. entgegengesetzt zur Filtrierrichtung durchströmt, werden, so daß durch dieses Rückspülen dann ursprünglich filtrierte Kunststoffschmelze mit Schmutzaggregaten beladen und über einen zur Atmosphäre hin offenen Abfuhrkanal aus dem Gehäuse abgeführt werden. Dieser Abfuhrkanal ist selbstverständlich in der ersten Stellung des Bolzens verschlossen und nur in der zweiten Stellung des Bolzens zur Atmosphäre hin geöffnet. Wie bereits bei den zuvor beschriebenen Ausführungsformen werden die erste Stellung und die die zweite Stellung und umgekehrt hierzu durch eine axiale Verschiebung des Bolzens herbeigeführt.

Klarstellend ist anzumerken, daß der in der vorliegenden Beschreibung verwendete Begriff Kunststoffschmelze insbesondere eine Polypropylen-, Polyethylen-, Hochdruckpolypropylen-, Niederdruckpolyethylen-, lineares Niederdruckpolyethylen-, Polystyrol-, Polyamid-, Alkyl-Butadien-Styrol- (ABS), Polyester-, Polyoxymethylen- (POM), Polyacrylate-, Polymethylmethacrylate-(PMMA) und Polyvinylchlorid-Schmelze bezeichnet. Desweiteren ist klarstellend anzumerken, daß alle im Singular verwendeten Begriffe in der vorliegenden Beschreibung nicht nur den einen Begriff umfaßt, sondern daß hierunter auch eine beliebige Anzahl dieser Begriffe fällt. Weiterhin ist festzuhalten, daß alle Begriffe, die mit "und/oder" verknüpft sind, sowohl additiv als auch alternativ aufzufassen sind, wobei diese Aussage auch dann gilt, wenn bei einer Aufzählung von mehr als zwei Begriffen nur die beiden letzten Begriffe mit "und/oder" verbunden sind, so daß bei dieser Art der Aufzählung alle Begriffe oder nur ein Teil der Begriffe additiv oder alternativ miteinander verknüpft sind. Die Begriffe stromauf und stromab beziehen sich stets auf die Strömungsrichtung der zu filtrierenden Kunststoffschmelze. Weiterhin ist festzuhalten, daß der in der vorliegenden Beschreibung verwendete Begriff "Reihe" nicht nur ein lineares Aufeinanderfolgen der Filterkerzen bezeichnet sondern auch ausdrücken kann, daß diese "Reihe von Filterkerzen" gekrümmt oder bogenförmig verläuft, wobei die Form dieses Verlaufes insbesondere davon abhängig ist, nach welchem Muster die Filterkerzen auf der Halterungsplatte angeordnet sind. Ferner ist klarstellend festzuhalten, daß die Filterkerzen eines Filterelementes nicht nur in einer einzigen ersten Reihe und in einer einzigen zweiten Reihe angeordnet sind, sondern daß die Filterkerzen in einer Vielzahl von aufeinanderfolgenden ersten Reihen und in einer Vielzahl von aufeinanderfolgenden zweiten Reihen positioniert sind, wie dies insbesondere auch in der Zeichnung dargestellt ist.

Die erfindungsgemäße Vorrichtung wird nachfolgend anhand von fünf Ausführungsbeispielen in Verbindung mit der Zeichnung näher erläutert. Es zeigen:
- Figur 1: eine schematische Darstellung einer Vorrichtung zum Filtrieren einer thermoplastischen Kunststoffschmelze;
- Figur 2: eine schematische perspektivische Teilansicht des Bol- zens mit der im Bolzen vorgesehenen Durchtrittsöffnung und dem dort angeordneten Filterelement;
- Figur 3: eine perspektivische Teilansicht in Blickrichtung der Linie A-B in Figur 2;
- Figur 4: eine perspektivische Teilansicht in Blickrichtung der Linie C-D in Figur 2;
- Figur 5: eine schematische Schnittansicht des Bolzens gemäß der Linie A-B in Figur 7 mit teilweise herausgebrochener Wandung mit der im Bolzen vorgesehenen Durchtrittsöff- nung und dem dort angeordneten Filterelement gemäß der Erfindung;
- Figur 6: eine perspektivische Teilansicht längs der Linie A-B in Figur 7;
- Figur 7: eine perspektivische Teilansicht der Erfindung;
- Figur 8: eine Explosionszeichnung der im Bolzen vorgesehenen Durchtrittsöffnung und dem dort angeordneten Filter- element gemäß der Erfindung;
- Figur 9: eine schematische perspektivische Teilansicht des Bol- zens mit der im Bolzen vorgesehenen Durchtrittsöffnung und dem dort angeordneten Filterelement ; und
- Figur 10: eine schematische perspektivische Ansicht des Bolzens mit der im Bolzen vorgesehenen Durchtrittsöffnung und dem dort angeordneten Filterelement .

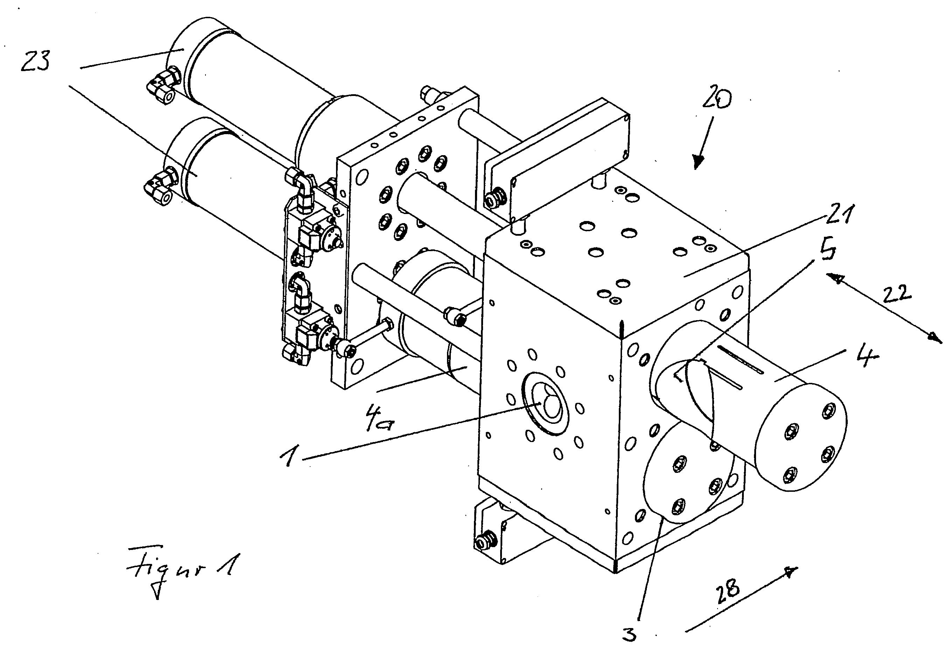

In den Figuren 1 bis 10 sind die selben Teile mit den selben Bezugszeichen versehen.

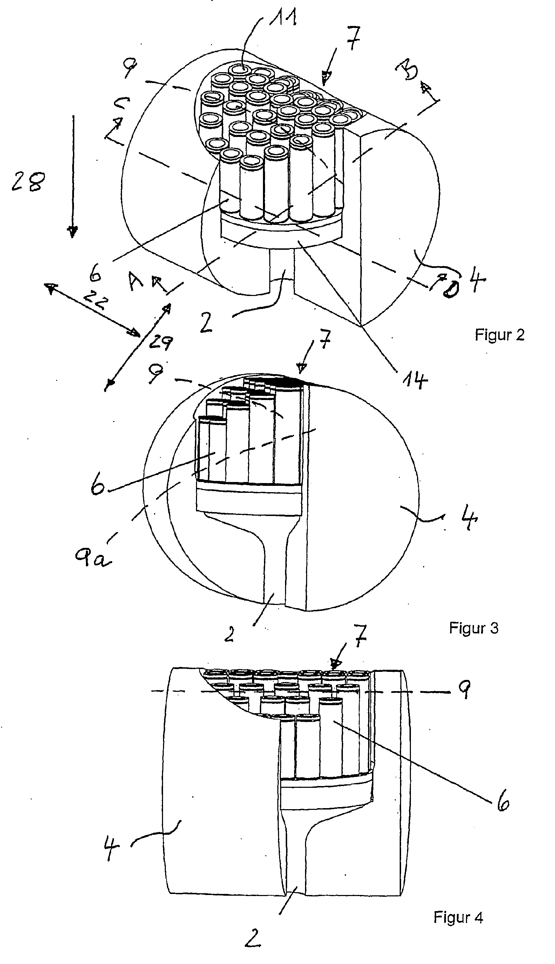

In Figur 1 ist schematisch eine Vorrichtung (insgesamt mit 20 bezeichnet) zum Filtrieren einer thermoplastischen Kunststoffschmelze abgebildet, wobei die Vorrichtung 20 ein Gehäuse 21 aufweist. Bei dem abgebildeten Beispiel der Vorrichtung ist das Gehäuse 21 der Vorrichtung 20 mit zwei zylindrischen Bohrungen 3 versehen, wobei die zylindrischen Bohrungen 3 einen oberen Bolzen 4 und einen unteren Bolzen 4a axial verschiebbar in Pfeilrichtung 22 und umgekehrt hierzu lagern. Um diese axiale Verschiebung der Bolzen 4 bzw. 4a zu bewirken, sind den beiden Bolzen 4 bzw. 4a Hydraulikelemente 23 zugeordnet. Der obere Bolzen 4 und der untere Bolzen 4a sind identisch ausgebildet und weisen mindestens eine sich in Strömungsrichtung (Pfeil 28) der zu filtrierenden Kunststoffschmelze gesehen erstreckende Durchtrittsöffnung 5 auf, wie dies beim oberen Bolzen 4 zu erkennen ist. Diese Durchtrittsöffnung 5 nimmt jeweils ein Filterelement auf, das in verschiedenen Ausführungsformen in den Figuren 2 bis 9 im Detail abgebildet ist. In Strömungsrichtung der zu filtrierenden Kunststoffschmelze gesehen gelangt diese Kunststoffschmelze über einen Eintrittskanal 1 in das Gehäuse 21 der Vorrichtung 20, von dort in die Durchtrittsöffnung 5, die mit dem Eintrittskanal 1 während des Filtrierens fluchtet, wird durch das in der Durchtrittsöffnung 5 angeordnete Filterelement filtriert und gelangt stromab von dem Filterelement in den Austrittskanal (nicht erkennbar), der seinerseits wiederum während des Filtrierens mit dem Eintrittskanal und der Durchtrittsöffnung fluchtet. Stromab des Austrittskanals ist dann ein nicht gezeigtes Werkzeug oder eine Düse positioniert, die möglichst kontinuierlich mit filtrierter Kunststoffschmelze versorgt wird. Wie in Figur 1 andeutungsweise zu erkennen ist, ist der Eintrittskanal 1 auf zwei Teilkanäle aufgeteilt, so daß sich der Eintrittskanal in der Nähe der Front des Gehäuses 21 aufteilt, um so einen Teilstrom der zu filtrierenden Kunststoffschmelze zum unteren Bolzen 4a und einen weiteren Teilstrom der zu filtrierenden Kunststoffschmelze zum oberen Bolzen 4 zu führen. Dementsprechend ist der nicht gezeigte Austrittskanal ebenfalls aufgeteilt und mündet endseitig in einen gemeinsamen Austrittskanal.

Bei der in Figur 1 gezeigten Ausführungsform ist der untere Bolzen 4a in der Arbeitsstellung (Filtrierstellung), während der obere Bolzen 4 in einer Position abgebildet ist, in der die Durchtrittsöffnung 5 frei von außen zugänglich ist, so daß hier ein Austausch des mit Schmutzpartikeln beladenen Filterelementes gegen ein unbeladenes Filterelement erfolgen kann.

Die zylindrischen Bohrungen 3 im Gehäuse 21 sind so auf die Durchmesser der Bolzen 4 bzw. 4a angepaßt, daß selbst bei einer axialen Verschiebung der Bolzen in Pfeilrichtung 22 keine Leckage auftritt und somit hier keine Kunststoffschmelze unerwünscht austreten kann.

In den Figuren 2 bis 4 ist eine Ausführungsform als Teilansicht abgebildet, die im Detail zeigt, wie bei der Vorrichtung die Filterkerzen 6 des insgesamt mit 7 bezeichneten Filterelementes ausgebildet und angeordnet sind.

Wie aus den Figuren 2 bis 4 zu erkennen ist, weist das Filterelement 7 eine Vielzahl von Filterkerzen 6 auf, die von einer quer zur Strömungsrichtung der Kunststoffschmelze positionierten runden Halterungsplatte 14 gehaltert und jeweils in solchen ersten Reihen 9 und zweiten Reihen 9a angeordnet sind, die, abhängig von der Abbildung, gemäß Figur 2 und 3 bogenförmig gekrümmt verlaufen und gemäß Figur 4 anscheinend linear ausgerichtet ist. Klarstellend ist anzumerken, daß bei den Figuren 2 bis 9 nur jeweils eine erste Reihe 9 und jeweils eine zweite Reihe 9a beispielhaft eingezeichnet sind.

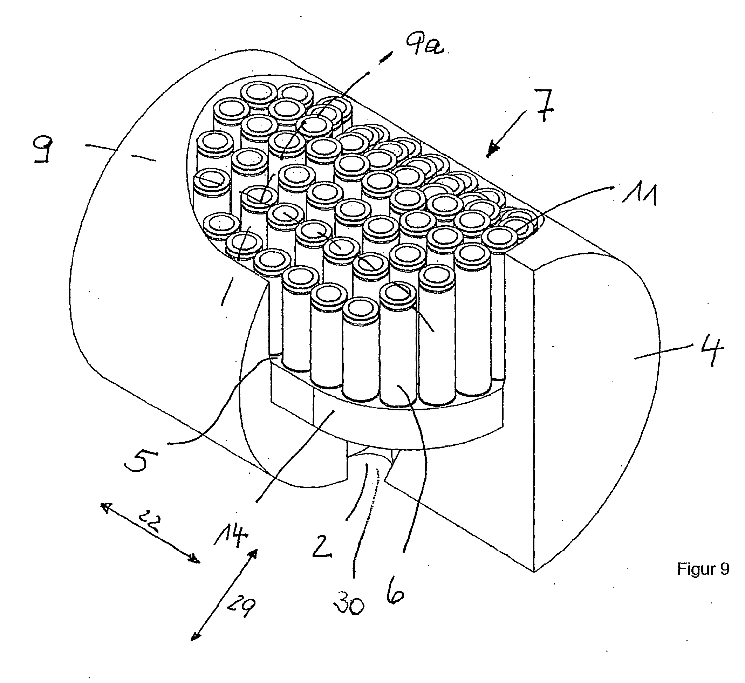

In Verschieberichtung 22 des Bolzens gesehen (nur bei Figuren 2 und 9 eingezeichnet) sind die axialen Längen aller Filterkerzen 6 der ersten Reihe 9 identisch groß, während senkrecht (ausgedrückt durch Pfeilrichtung 29) zur Verschieberichtung des Bolzens 4 gesehen die axialen Längen einer zweiten Reihe 9a der Filterkerzen 6 an die Krümmungslinie der Bohrung 3 so angepaßt sind, daß zwischen den Kopfflächen 11 der Filterkerzen 6 und dem zugehörigen Abschnitt der Krümmungslinie der Bohrung 3 (Figur 1) nur ein minimierter Abstand ausgebildet ist. Die gesamte Fläche der Halterungsplatte 14 ist mit Filterkerzen 6 besetzt, die in aufeinanderfolgenden ersten Reihen 9 und zweiten Reihen 9a ausgerichtet sind. Bedingt durch die dichte Anpassung des Durchmessers des Bolzens 4 an die Bohrung 3 im Gehäuse 21 ist die Krümmungslinie der Bohrung 3 in etwa identisch mit der Außenwandung des Bolzens 4, so daß die Durchtrittsöffnung 5 im Bolzen unter Beibehaltung einer minimalen Totzone vollständig mit Filterkerzen stromauf der Halterungsplatte 14 ausgefüllt ist.

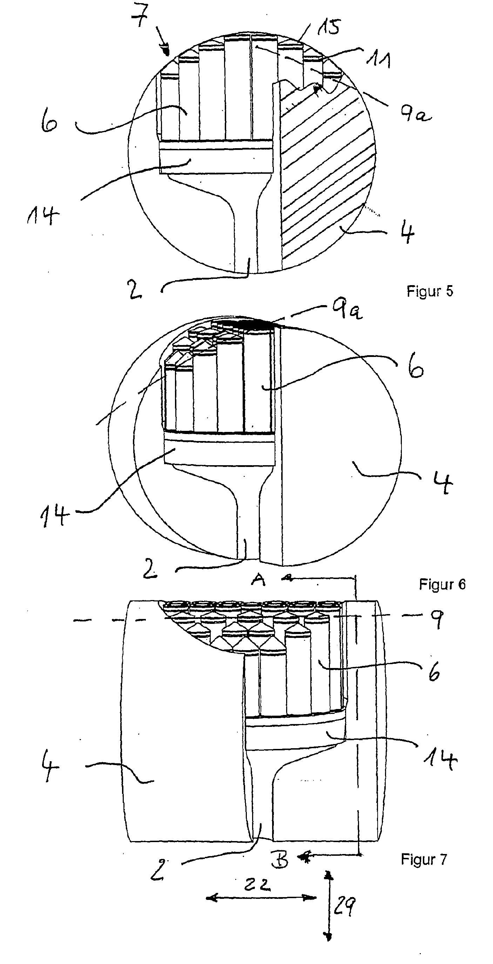

In den Figuren 5 bis 7 ist die Erfindung gemäß Patentanspruch 1 als Teilansicht abgebildet, die im Detail zeigt, wie bei der Vorrichtung die Filterkerzen 6 des insgesamt mit 7 bezeichneten Filterelementes ausgebildet und angeordnet sind. Hierbei unterscheidet sich diese zweite Ausführungsform von der zuvor in Verbindung mit den Figuren 2 bis 4 beschriebene erste Ausführungsform dahingehend, daß bei der zweiten Ausführungsform gemäß der Figuren 5 bis 7 jede Kopffläche 11 der Filterkerzen 6 mit einem Abschlußelement 15 versehen ist, so daß bei dieser zweiten Ausführungsform dieses konisch geformte Abschlußelement 15 einerseits eine rheologische Leitfunktion für die zu filtrierende Kunststoffschmelze wahrnimmt und andererseits im Sinne der vorstehenden Beschreibung eine Kopffläche der Filterkerzen ausbildet, die einen minimierten Abstand zu dem zugehörigen Abschnitt der Krümmungslinie der Bohrung aufweist und damit die Totzonen volumenmäßig oberhalb der Kopfflächen der Filterkerzen reduziert.

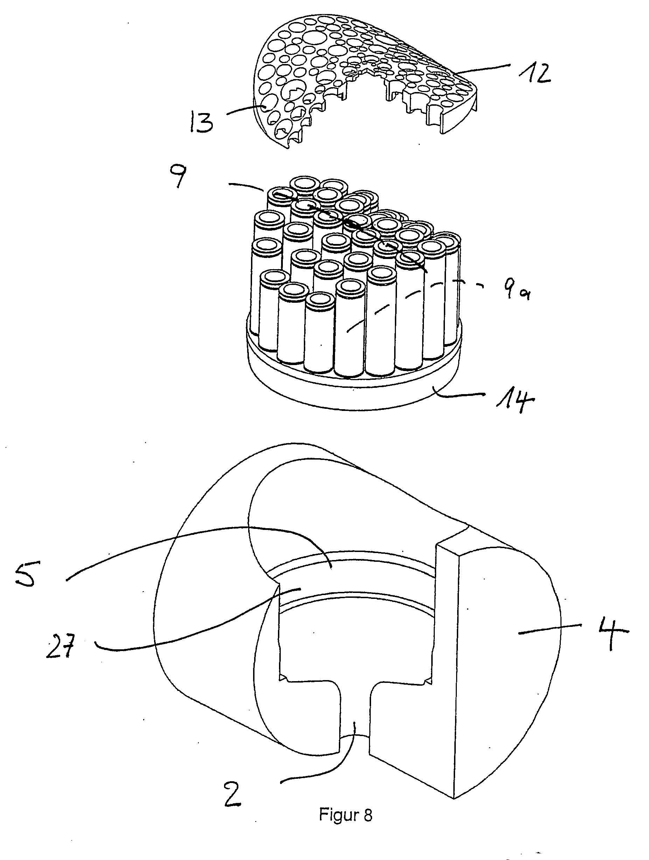

In der Figur 8 ist die Erfindung gemäß Patentanspruch 2 als Explosionsansicht abgebildet, die im Detail zeigt, wie bei der Vorrichtung die Filterkerzen 6 des insgesamt mit 7 bezeichneten Filterelementes ausgebildet und angeordnet sind. Hierbei unterscheidet sich diese dritte Ausführungsform von der zuvor in Verbindung mit den Figuren 5 bis 7 beschriebenen zweiten Ausführungsform dahingehend, daß bei der dritten Ausführungsform gemäß der Figur 8 die bei der zweiten Ausführungsform vorgesehenen einzelnen Abschlußelemente 15, die einer jeden Filterkerze 6 individuell zugeordnet sind, durch eine gemeinsame Abschlußplatte 12 ersetzt sind, die mit einer Vielzahl von Bohrungen 13 durchsetzt ist. Wie der separaten Abbildung (obere Abbildung der Figur 8) der Abschlußplatte 12 zu entnehmen ist, sind die über die Oberfläche verteilten Bohrungen 13 mit unterschiedlichen Durchmessern versehen, so daß hierdurch individuell das rheologische Verhalten der zu filtrierenden Kunststoffschmelze gesteuert werden kann. Desweiteren ist deutlich zu erkennen, daß die Abschlußplatte 12 gekrümmt ausgebildet ist und eine tunnelförmige Wölbung aufweist, um sich so an die ersten Reihen 9 und die zweiten Reihen 9a der Filterkerzen 6 dicht anzupassen und damit das Totvolumen unter Optimierung der Filterflächen zu reduzieren, wobei sich die Halterungsplatte 14 an einem radial nach innen ragenden Ringelement 27, das innerhalb der Durchtrittsöffnung 5 vorgesehen ist, abstützt, wie dies auch bei den zuvor beschriebenen Ausführungsformen der Fall ist. Damit bildet die Oberfläche der Abschlußplatte 12 die Kopfflächen der Filterkerzen im Sinne der vorstehenden Beschreibung aus. Falls gewünscht, kann die Abschlußplatte 12 mit der Haltungsplatte 14 unter Einschluß der Filterkerzen 6 miteinander lösbar verbunden sein, um so das Filterelement 7 insgesamt bei einem Wechsel leichter entnehmen zu können.

Grundsätzlich ist in diesem Zusammenhang festzuhalten, daß, falls erforderlich, bei all den zuvor beschriebenen Ausführungsformen die Filterkerzen 6 mit der Halterungsplatte 14 lösbar verbunden sein können, so zum Beispiel durch entsprechende Gewinde- oder Bajonett-Verbindungen.

In der Figur 9 ist eine Ausführungsform als Teilansicht abgebildet, die im Detail zeigt, wie bei der Vorrichtung die Filterkerzen 6 des insgesamt mit 7 bezeichneten Filterelementes ausgebildet und angeordnet sind. Hierbei unterscheidet sich diese vierte Ausführungsform von der zuvor in Verbindung mit den Figuren 2 bis 4 beschriebenen ersten Ausführungsform dahingehend, daß bei der vierten Ausführungsform gemäß der Figur 9 die Durchtrittsöffnung 5 im Bolzen 4 nicht rund sondern oval ausgebildet ist, so daß hierdurch die Zahl der Filterkerzen 6 und damit auch die gesamte Filterflächen vergrößert wird bzw. werden.

Wie ebenfalls aus der Figur 9 zu erkennen ist, weist das Filterelement 7 eine Vielzahl von Filterkerzen 6 auf, die von einer quer zur Strömungsrichtung der Kunststoffschmelze positionierten ovalen Halterungsplatte 14 gehaltert und jeweils in solchen ersten Reihen 9 und zweiten Reihen 9a angeordnet sind, wie diese zuvor schon beschrieben sind. Klarstellend ist anzumerken, daß bei der Figur 9 nur jeweils eine erste Reihe 9 und jeweils eine zweite 9a beispielhaft eingezeichnet sind.

In Verschieberichtung 22 des Bolzens gesehen sind die axialen Längen aller Filterkerzen 6 der ersten Reihe 9 identisch groß, während senkrecht (ausgedrückt durch Pfeilrichtung 29) zur Verschieberichtung 22 des Bolzens 4 gesehen die axialen Längen der zweiten Reihe 9a der Filterkerzen 6 an die Krümmungslinie der Bohrung 3 (Figur 1) so angepaßt sind, daß zwischen den Kopfflächen 11 der Filterkerzen 6 und dem zugehörigen Abschnitt der Krümmungslinie der Bohrung 3 (Figur 1) nur ein minimierter Abstand ausgebildet ist. Die gesamte Fläche der Halterungsplatte 14 ist mit Filterkerzen 6 besetzt, die in aufeinanderfolgenden ersten Reihen 9 und zweiten Reihen 9a ausgerichtet sind. Bedingt durch die dichte Anpassung des Durchmessers des Bolzens 4 an die Bohrung 3 im Gehäuse 21 ist die Krümmungslinie der Bohrung 3 in etwa identisch mit der Außenwandung des Bolzens 4, so daß die Durchtrittsöffnung 5 im Bolzen unter Beibehaltung einer minimalen Totzone vollständig mit Filterkerzen stromauf der Halterungsplatte 14 ausgefüllt ist. Stromab des Filterelementes 7 und insbesondere stromab der Halterungsplatte 14 mündet die ovale Durchtrittsöffnung 5 in einen Kanal 30, wobei der Kanal 30 einen runden Durchmesser aufweist, der identisch ist mit dem Durchmesser des runden Austrittskanals.

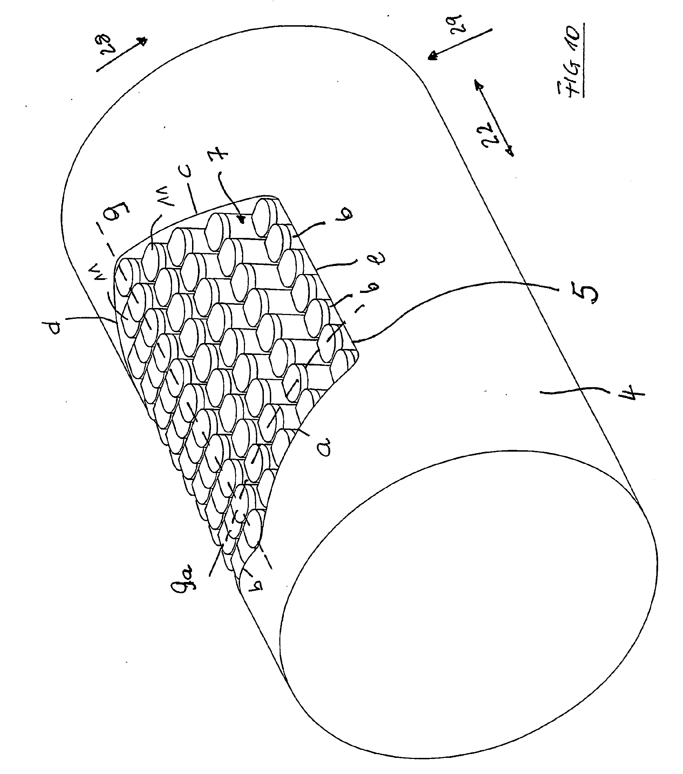

Die Figur 10 bildet eine Ausführungsform eines Bolzens als perspektivische Ansicht ab, die im Detail zeigt, wie bei der Vorrichtung die Filterkerzen 6 des insgesamt mit 7 bezeichneten Filterelementes ausgebildet und angeordnet sind. Hierbei unterscheidet sich diese fünfte Ausführungsform von der zuvor in Verbindung mit den Figuren 2 bis 4 beschriebenen ersten Ausführungsform dahingehend, daß bei der fünften Ausführungsform gemäß der Figur 10 die Durchtrittsöffnung 5 im Bolzen 4 nicht rund sondern sechseckig ausgebildet ist, so daß hierdurch die Zahl der Filterkerzen 6 und damit auch die gesamte Filterflächen vergrößert wird bzw. werden.

Wie ebenfalls aus der Figur 10 zu erkennen ist, weist das Filterelement 7 eine Vielzahl von Filterkerzen 6 auf. Eine nicht erkennbare sechseckige Halterungsplatte, die quer zur Strömungsrichtung der Kunststoffschmelze innerhalb des Bolzens 4 positioniert ist, haltert die überwiegend zylindrischen Filterkerzen 6. Diese Filterkerzen 6 sind jeweils in solchen ersten Reihen 9 und zweiten Reihen 9a angeordnet, wie diese zuvor schon beschrieben sind. Klarstellend ist anzumerken, daß bei der Figur 10 nur jeweils eine erste Reihe 9 und jeweils eine zweite 9a beispielhaft eingezeichnet sind.

In Verschieberichtung 22 des Bolzens gesehen sind die axialen Längen aller Filterkerzen 6 der ersten Reihe 9 identisch groß, während senkrecht (ausgedrückt durch Pfeilrichtung 29) zur Verschieberichtung 22 des Bolzens 4 gesehen die axialen Längen der zweiten Reihe 9a der Filterkerzen 6 an die Krümmungslinie der Bohrung 3 (Figur 1) so angepaßt sind, daß zwischen den Kopfflächen 11 der Filterkerzen 6 und dem zugehörigen Abschnitt der Krümmungslinie der Bohrung 3 (Figur 1) nur ein minimierter Abstand ausgebildet ist. Bedingt durch die dichte Anpassung des Durchmessers des Bolzens 4 an die Bohrung 3 im Gehäuse 21 ist die Krümmungslinie der Bohrung 3 in etwa identisch mit der Außenwandung des Bolzens 4, so daß die sechseckige Durchtrittsöffnung 5 im Bolzen unter Beibehaltung einer minimalen Totzone vollständig mit Filterkerzen stromauf der Halterungsplatte ausgefüllt ist. Stromab des Filterelementes 7 und insbesondere stromab der Halterungsplatte mündet die sechseckige Durchtrittsöffnung 5 im Bereich des zweiten Abschnittes in einen runden Querschnitt (nicht abgebildet), wobei der Durchmesser dieses runden Durchtrittsöffnungsbereiches identisch ist mit dem Durchmesser des ebenfalls runden Austrittskanals. Dies bedeutet, daß die Durchtrittsöffnung über ihre axiale Länge gesehen einen zum Eintrittskanal hin weisenden sechseckigen ersten Abschnitt und stromab der Halterungsplatte einen ebenfalls sechseckigen Querschnitt aufweist, der jedoch noch innerhalb des Bolzens in einen runden Querschnitt einmündet, wobei dieser Durchtrittsöffnungsbereich vorstehend als zweiter Abschnitt bezeichnet wurde. Bezüglich der Ausgestaltung des Querschnitts der Durchtrittsöffnung der in Figur 10 gezeigten Ausführungsform ist festzuhalten, daß es sich hierbei, wie bereits vorstehend wiederholt erwähnt, im ersten Abschnitt und teilweise auch im zweiten Abschnitt um ein Sechseck handelt. Dieses Sechseck ist ein regelmäßiges konvexes Sechseck, bei dem alle Winkel identisch sind. Die Länge der vier Seiten a bis d dieses Sechsecks sind ebenfalls identisch, während die Seite e und die in Figur 10 nicht erkennbare, parallel hierzu ausgerichtete zugehörige Seite ebenfalls identisch lang sind, jedoch länger als die vier Seiten a bis d. Von daher kann man die Querschnittsform auch in Verschieberichtung des Bolzens gesehen als langgezogenes Sechseck bezeichnen.

## Patentansprüche

1. Vorrichtung zum Filtrieren einer thermoplastischen Kunststoffschmelze mit einem Gehäuse, das mit einem Eintrittskanal für die Kunststoffschmelze und einem Austrittskanal für die Kunststoffschmelze versehen ist, wobei der Eintrittskanal von dem Austrittskanal durch mindestens eine senkrecht zu den Kanälen verlaufende zylindrische Bohrung zur Aufnahme von mindestens einem axial verschiebbaren Bolzen abgetrennt ist und der Bolzen mit mindestens einer Durchtrittsöffnung zur Aufnahme von mindestens einem aus einer Vielzahl von Filterkerzen bestehenden Filterelement versehen ist, die in Verschieberichtung des Bolzens und senkrecht hierzu in Reihen angeordnet und die in Strömungsrichtung der Kunststoffschmelze axial ausgerichtet sind, wobei in Verschieberichtung des Bolzens gesehen die axialen Längen aller Filterkerzen einer ersten Reihe identisch sind und senkrecht zur Verschieberichtung des Bolzens gesehen die axialen Längen aller Filterkerzen einer zweiten Reihe an die Krümmungslinie der Bohrung derart angepaßt sind, daß zwischen den Kopfflächen der Filterkerzen und dem zugehörigen Abschnitt der Krümmungslinie der Bohrung) ein minimierter Abstand ausgebildet ist, **dadurch gekennzeichnet, daß** allen Kopfflächen (11) der Filterkerzen (6) eine gemeinsame Abschlußplatte (12) zugeordnet ist, die mit Bohrungen (13) versehen ist.

2. Vorrichtung zum Filtrieren einer thermoplastischen Kunststoffschmelze mit einem Gehäuse, das mit einem Eintrittskanal für die Kunststoffschmelze und einem Austrittskanal für die Kunststoffschmelze versehen ist, wobei der Eintrittskanal von dem Austrittskanal durch mindestens eine senkrecht zu den Kanälen verlaufende zylindrische Bohrung zur Aufnahme von mindestens einem axial verschiebbaren Bolzen abgetrennt ist und der Bolzen mit mindestens einer Durchtrittsöffnung zur Aufnahme von mindestens einem aus einer Vielzahl von Filterkerzen bestehenden Filterelement versehen ist, die in Verschieberichtung des Bolzens und senkrecht hierzu in Reihen angeordnet und die in Strömungsrichtung der Kunststoffschmelze axial ausgerichtet sind, wobei in Verschieberichtung des Bolzens gesehen die axialen Längen aller Filterkerzen einer ersten Reihe identisch sind und senkrecht zur Verschieberichtung des Bolzens gesehen die axialen Längen aller Filterkerzen einer zweiten Reihe an die Krümmungslinie der Bohrung derart angepaßt sind, daß zwischen den Kopfflächen der Filterkerzen und dem zugehörigen Abschnitt der Krümmungslinie der Bohrung ein minimierter Abstand ausgebildet ist, **dadurch gekennzeichnet, daß** jede Filterkerze (6) mit einem der Kopffläche zugeordneten konischen oder konusartigen Abschlußelement versehen ist.

3. Vorrichtung nach Anspruch 1 oder 2, **dadurch gekennzeichnet, daß** die Kopfflächen (11) der Filterkerzen (6) mit einem Abstand von 2 mm bis 0,5 mm zu dem zugehörigen Abschnitt der Krümmungslinie der Bohrung (3) angeordnet sind.

4. Vorrichtung nach Anspruch 1 oder 3, **dadurch gekennzeichnet, daß** die Bohrungen (13) unterschiedliche Durchmesser aufweisen.

5. Vorrichtung nach einem der vorangehenden Ansprüche, **dadurch gekennzeichnet, daß** die Filterkerzen (6) auf einer senkrecht zur Strömungsrichtung der Kunststoffschmelze angeordneten Halterungsplatte (14) positioniert sind, die mit Durchtrittsöffnungen für die Kunststoffschmelze versehen ist.

6. Vorrichtung nach Anspruch 1 und 5, **dadurch gekenntzeichnet, daß** die Halterungsplatte (14) mit der Abschlußplatte (12) lösbar verbunden ist.

7. Vorrichtung nach einem der vorangehenden Ansprüche, **dadurch gekennzeichnet, daß** die Durchtrittsöffnung (5) im Bolzen (4) einen polygonen, insbesondere einen vier- bis zehneckigen, Querschnitt aufweist.

8. Vorrichtung nach Anspruch 7, **dadurch gekennzeichnet, daß** die Durchtrittsöffnung (5) im Bolzen (4) in einem ersten, zum Eintrittskanal (1) hin weisenden anschnitt polygon ausgebildet ist und daß sich stromab des Filterelementes (7) ein zweiter Abschnitt der Durchtrittsöffnung (5) anschließt, in dem diese polygone Durchtrittsöffnung in eine runde Durchtrittsöffnung einmündet.

9. Vorrichtung nach Anspruch 8, **dadurch gekennzeichnet, daß** der Durchmesser der im zweiten Abschnitt vorgesehenen runden Durchtrittsöffnung identisch ist mit dem Durchmesser des Einmündungsbereiches des Austrittskanals (2).

10. Vorrichtung nach einem der Ansprüche 7 bis 9, **dadurch gekennzeichnet, daß** die polygone Durchtrittsöffnung im Querschnitt als regelmäßiges Sechseck ausgebildet ist.

11. Vorrichtung nach einem der Ansprüche 1 bis 6, **dadurch gekenntzeichnet, daß** die Durchtrittsöffnung (5) im Bolzen (4) rund ausgebildet ist.

12. Vorrichtung nach einem der Ansprüche 1 bis 6, **dadurch gekennzeichnet, daß** die Durchtrittsöffnung (5) im Bolzen (4) oval ausgebildet ist.

13. Vorrichtung nach einem der Ansprüche 1 bis 6 oder 11, **dadurch gekennzeichnet, daß** die Durchtrittsöffnung (5) im Bolzen (4) als zwei, sich teilweise überdeckenden runden Durchtrittsöffnungen ausgebildet ist.

14. Vorrichtung nach Anspruch 12 oder 13, **dadurch gekennzeichnet, daß** die Durchtrittsöffnung (5) im Bolzen (4) in einem ersten Abschnitt oval oder aus zwei sich teilweise überdeckenden runden Durchtrittsöffnungen (5) ausgebildet ist und daß sich stromab des Filterelementes (7) ein zweiter Abschnitt der Durchtrittsöffnung (5) anschließt, der aus einem runden Kanal (30) ausgebildet ist.

15. Vorrichtung nach einem der vorangehenden Ansprüche, **dadurch gekennzeichnet, daß** das Gehäuse (21) einen einzigen Eintrittskanal (1), einen einzigen Austrittskanal, eine einzige zylindrische Bohrung (3) zur axial verschiebbaren Lagerung von einem einzigen Bolzen (4; 4a) aufweist, wobei der Bolzen eine einzige Durchtrittsöffnung (5) zur Aufnahme eines einzigen Filterelementes (7) besitzt.

16. Vorrichtung nach einem der Ansprüche 1 bis 14, **dadurch gekennzeichnen, daß** der zylindrische Bolzen (4, 4a) mit zwei mit axialen Abstand voneinander angeordnete Durchtrittsöffnungen jeweils zur Aufnahme von einem Filterelement (7) versehen ist, wobei in einer ersten Stellung des Bolzens die Filterkerzen (6) von beiden Filterelementen (7) mit der zu filtrierenden Kunststoffschmelze durchströmt werden und in einer zweiten Stellung des Bolzens (4, 4a) die Filterkerzen (6) von einem Filterelement (7) mit der zu filtrierenden Kunststoffschmelze durchströmt werden, während gleichzeitig sich die Filterkerzen (6) des anderen Filterelementes (7) in einer Position außerhalb des Gehäuses (21) der Vorrichtung (20) befinden, und daß der Bolzen (4, 4a) von der ersten Stellung in die zweite Stellung und umgekehrt hierzu axial verschiebbar ist.

17. Vorrichtung nach einem der Ansprüche 1 bis 14, **dadurch gekennzeichnet, daß** die Vorrichtung (20) mindestens zwei, innerhalb eines Gehäuses (21) angeordnete und axial hierzu vierschiebbare Bolzen (4, 4a) aufweist, die jeweils mit mindestens zwei, mit axialen Abstand voneinander angeordnete Filterelementen (7) versehen sind, wobei in einer ersten Stellung der Bolzen (4, 4a) die Filterkerzen (6) aller Filterelemente (7) mit der zu filtrierenden Kunststoffschmelze durchströmt werden und in einer zweiten Stellung des einen der beiden Bolzen sich mindestens ein Filterelement (7) in einer Position außerhalb des Gehäuses (21) der Vorrichtung (20) befindet, während gleichzeitig die Filterkerzen (6) der anderen verbleibenden Filterelemente (7) von der zu filtrierenden Kunststoffschmelze durchströmt werden, und daß die Bolzen (4, 4a) von der ersten Stellung in die zweite Stellung und umgekehrt hierzu axial verschiebbar sind.

18. Vorrichtung nach einem der Ansprüche 1 bis 14, **dadurch gekennzeichnet, daß** der mindestens eine zylindrische Bolzen (4, 4a) mit zwei mit axialen Abstand voneinander angeordneten Durchtrittsöffnungen (5) jeweils zur Aufnahme von einem Filterelement (7) versehen ist, wobei in einer ersten Stellung des Bolzens (4, 4a) die Filterkerzen (6) von beiden Filterelementen (7) mit der zu filtrierenden Kunststoffschmelze durchströmt werden und in einer zweiten Stellung des mindestens einen Bolzens (4, 4a) die Filterkerzen (6) des einen Filterelementes (7) mit der zu filtrierenden Kunststoffschmelze durchströmt werden, während gleichzeitig die Filterkerzen (6) des anderen Filterelementes (7) mit filtrierter Kunststoffschmelze rückgespült werden, daß dem Gehäuse (21) ein zur Atmosphäre hin offener Abfuhrkanal zugeordnet ist, der in der ersten Stellung des Bolzens (4, 4a) verschlossen und in der zweiten Stellung des Bolzens zur Atmosphäre hin geöffnet ist, und daß der Bolzen von der ersten Stellung in die zweite Stellung und umgekehrt hierzu axial verschiebbar ist.

## Claims

1. A device for filtering a thermoplastic melt with a housing that is provided with an inlet channel for the plastic melt and with an outlet channel for the plastic melt, wherein the inlet channel is separated from the outlet channel by at least one cylindrical bore running perpendicularly to the channels for accommodating at least one axially displaceable bolt and the bolt is provided with at least one passage opening for accommodating at least one filter element consisting of a multiplicity of filter candles, which in displacement direction of the bolt and vertically thereto are arranged in rows and which in flow direction of the plastic melt are orientated axially, wherein seen in displacement direction of the bolt the axial lengths of all filter candles of a first row are identical and seen vertically to the displacement direction of the bolt the axial lengths of all filter candles of a second row are adapted to the curvature line of the bore in such a manner that between the head surfaces of the filter candles and the associated section of the curvature line of the bore a minimized spacing is formed, **characterised in that** all head surfaces (11) of the filter candles (6) are assigned a common end plate (12) which is provided with bores (13).

2. A device for filtering a thermoplastic melt with a housing that is provided with an inlet channel for the plastic melt and with an outlet channel for the plastic melt, wherein the inlet channel is separated from the outlet channel by at least one cylindrical bore running perpendicularly to the channels for accommodating at least one axially displaceable bolt and the bolt is provided with at least one passage opening for accommodating at least one filter element consisting of a multiplicity of filter candles, which in displacement direction of the bolt and vertically thereto are arranged in rows and which in flow direction of the plastic melt are orientated axially, wherein seen in displacement direction of the bolt the axial lengths of all filter candles of a first row are identical and seen vertically to the displacement direction of the bolt the axial lengths of all filter candles of a second row are adapted to the curvature line of the bore in such a manner that between the head surfaces of the filter candles and the associated section of the curvature line of the bore a minimized spacing is formed, **characterised in that** each filter candle (6) is provided with a conical or cone-like element assigned to the head surface.

3. The device according to claim 1 or 2, **characterised in that** the head surfaces (11) of the filter candles (6) are arranged with a spacing of 2 mm to 0,5 mm to the corresponding section of the curvature line of the bore (3).

4. The device according to claim 1 or 3, **characterised in that** the bores (13) have different diameters.

5. The device according to any one of the preceding claims, **characterised in that** the filter candles (6) are positioned on a holding plate (14) arranged perpendicularly to the flow direction of the plastic melt, which is provided with passage orifices for the plastic melt.

6. The device according to claim 1 and 5, **characterised in that** the holding plate (14) is releasably connected to the end plate (12).

7. The device according to any one of the preceding claims, **characterised in that** the passage opening (5) in the bolt (4) has a polygonal, more preferably a quadrangular to decagonal cross section.

8. The device according to claim 7, **characterised in that** the passage opening (5) in the bolt (4) is formed polygonally in a first section facing the inlet channel (1) and that down stream of the filter element (7) a second section of the passage opening (5) follows in which this polygonal passage opening terminates in a round passage opening.

9. The device according to claim 8, **characterised in that** the diameter of the round passage opening provided in the second section is identical to the diameter of the termination region of the outlet channel (2).

10. The device according any one of the claims 7 to 9, **characterised in that** the polygonal passage opening is designed as a regular hexagon in cross section.

11. The device according to any one of the claims 1 to 6, **characterised in that** the passage opening (5) in the bolt (4) is designed round.

12. The device according to any one of the claims 1 to 6, **characterised in that** the passage opening (5) in the bolt (4) is designed oval.

13. The device according to any one of the claims 1 to 6 or 11, **characterised in that** the passage opening (5) in the bolt (4) is designed as two round passage openings partly covering each other.

14. The device according to claim 12 or 13, **characterised in that** the passage opening (5) in the bolt (4) in a first section is designed oval or of two round passage openings (5) partly covering each other and that downstream of the filter element (7) a second section of the passage opening (5) follows which is formed of a round channel (30).

15. The device according to any one of the preceding claims, **characterised in that** the housing (21) comprises a single inlet channel (1), a single outlet channel, a single cylindrical bore (3) for the axially displaceable mounting of a single bolt (4; 4a), wherein the bolt has a single passage opening (5) for accommodating a single filter element (7).

16. The device according to any one of the claims 1 to 14, **characterised in that** the cylindrical bolt (4; 4a) is provided with two passage openings arranged with axial spacing to each other each for accommodating a filter element (7), wherein in a fist position of the bolt the plastic melt to be filtered flows through the filter candles (6) of both filter elements (7) and in a second position of the bolt (4, 4a) the plastic melt to be filtered flows through the filter candles (6) of one filter element (7), while the filter candles (6) of the other filter element (7) simultaneously are located in a position outside the housing (21) of the device (20), and that the bolt (4, 4a) can be axially displaced from the first position into the second position and vice versa.

17. The device according to any one of the claims 1 to 14, **characterised in that** the device (20) comprises at least two bolts (4, 4a) arranged within a housing (21) and displaceable axially thereto, each of which is provided with at least two filter elements (7) arranged with axial spacing from each other, wherein in a first position of the bolt (4, 4a) the plastic melt to be filtered flows through the filter candles (6) of all filter elements (7) and in a second position of the one of the two bolts at least one filter element (7) is located in a position outside the housing (21) of the device (20), while the plastic melt to be filtered simultaneously flows through the filter candles (6) of the other remaining filter elements (7), and that the bolts (4, 4a) can be axially displaced from the first position into the second position and vice versa.

18. The device according to any one of the claims 1 to 14, **characterised in that** the at least one cylindrical bolt (4, 4a) is provided with two passage openings (5) arranged with axial spacing from each other each for accommodating a filter element (7), wherein in a first position of the bolt (4, 4a), the plastic melt to be filtered flows through the filter candles (6) of both filter elements (7) and in a second position of the at least one bolt (4, 4a) the plastic melt to be filtered flows through the filter candles (6) of the one filter elements (7), while the filter candles (6) of the other filter element (7) are simultaneously backflushed with filtered plastic melt, **in that** the housing (21) is assigned a discharge channel open to the atmosphere, which in the first position of the bolt (4, 4a) is closed and in the second position of the bolt is opened to the atmosphere, and **in that** the bolt can be axially displaced from the first position into the second position and vice versa.

## Revendications

1. Dispositif de filtration d'une matière synthétique thermoplastique fondue avec un boîtier qui est muni d'un canal d'entrée et d'un canal de sortie pour la matière synthétique fondue, dispositif dans lequel le canal d'entrée est séparé du canal de sortie par au moins un orifice cylindrique orienté perpendiculairement aux canaux pour l'admission d'au moins un axe mobile, et dans lequel l'axe est muni d'au moins un orifice de passage pour l'admission d'au moins un élément de filtration constitué d'une multitude de bougies filtrantes, qui sont rangées dans la direction de déplacement de l'axe et perpendiculairement à celui-ci et qui sont dirigées axialement par rapport au sens d'écoulement de la matière synthétique fondue, dans lequel, vu à partir de la direction de déplacement de l'axe, les longueurs axiales de toutes les bougies de filtration d'une première rangée sont identiques, et vu perpendiculairement à la direction de déplacement de l'axe, les longueurs axiales de toutes les bougies de filtration d'une deuxième rangée sont ainsi adaptées à la ligne de courbure de l'orifice, de sorte qu'il se forme un espace minimal entre les têtes des bougies de filtration et l'espace correspondant à la ligne de courbure de l'orifice, **caractérisé en ce que** toutes les têtes (11) des bougies de filtration (6) s'alignent sur un plateau final commun (12) qui est muni de trous percés (13).

2. Dispositif de filtration d'une matière synthétique thermoplastique fondue avec un boîtier qui est muni d'un canal d'entrée et d'un canal de sortie pour la matière synthétique fondue, dispositif dans lequel le canal d'entrée est séparé du canal de sortie par au moins un orifice cylindrique orienté perpendiculairement aux canaux pour l'admission d'au moins un axe mobile, et dans lequel l'axe est muni d'au moins un orifice de passage pour l'admission d'au moins un élément de filtration constitué d'une multitude de bougies filtrantes, qui sont rangées dans la direction de déplacement de l'axe et perpendiculairement à celui-ci et qui sont dirigées axialement par rapport au sens d'écoulement de la matière synthétique fondue, dans lequel, vu à partir de la direction de déplacement de l'axe, les longueurs axiales de toutes les bougies de filtration d'une première rangée sont identiques, et vu perpendiculairement à la direction de déplacement de l'axe, les longueurs axiales de toutes les bougies de filtration d'une deuxième rangée sont ainsi adaptées à la ligne de courbure de l'orifice, de sorte qu'il se forme un espace minimal entre les têtes des bougies de filtration et l'espace correspondant à la ligne de courbure de l'orifice, **caractérisé en ce que** chaque bougie de filtration (6) est munie à la tête d'un élément de terminaison conique ou en cône.

3. Dispositif selon les revendications 1 ou 2, **caractérisé en ce que** les extrémités (11) des bougies de filtration (6) sont agencées avec un espace de 2 mm à 0,5 mm par rapport au segment correspondant à la ligne de courbure de l'orifice (3).

4. Dispositif selon les revendications 1 ou 3, **caractérisé en ce que** les trous percés (13) présentent des diamètres variables.

5. Dispositif selon l'une des revendications précédentes **caractérisé en ce que** les bougies de filtration (6) sont positionnées sur un plateau de maintien (14), muni d'orifices de passage pour la matière synthétique fondue, agencé perpendiculairement au sens d'écoulement de la matière synthétique fondue.

6. Dispositif selon les revendications 1 et 5, **caractérisé en ce que** le plateau de maintien (14) et le plateau final (12) peuvent être reliés ou détachés l'un par rapport à l'autre.

7. Dispositif selon l'une des revendications précédentes, **caractérisé en ce que** l'orifice de passage (5) dans l'axe (4) présente une section en forme de polygone, en particulier un polygone de quatre à dix côtés.

8. Dispositif selon la revendication 7 **caractérisé en ce que** l'orifice de passage (5) dans l'axe (4) est sous la forme d'un polygone dans une première portion proche du canal d'entrée (1) et qu'il se poursuit par une deuxième partie de l'orifice de passage (5) un peu plus loin le long de l'écoulement dans l'élément de filtration (7) **en ce que** cet orifice de passage polygonal débouche dans un orifice de passage circulaire.

9. Dispositif selon la revendication 8 **caractérisé en ce que** le diamètre dans la deuxième partie de l'orifice de passage circulaire prévu est identique au diamètre de la zone d'entrée du canal de sortie (2).

10. Dispositif selon l'une des revendications 7 à 9, **caractérisé en ce que** l'orifice de passage polygonal dans la section transversale est formé d'un hexagone régulier.

11. Dispositif selon l'une des revendications 1 à 6, **caractérisé en ce que** l'orifice de passage (5) dans l'axe (4) est de forme circulaire.

12. Dispositif selon l'une des revendications 1 à 6, **caractérisé en ce que** l'orifice de passage (5) dans l'axe (4) est de forme ovale.

13. Dispositif selon l'une des revendications 1 à 6 ou 11, **caractérisé en ce que** l'orifice de passage (5) dans l'axe (4) est formé de deux orifices de passage circulaires, l'un se superposant partiellement à l'autre.

14. Dispositif selon les revendications 12 ou 13, **caractérisé en ce que** l'orifice de passage (5) dans l'axe (4) est de forme ovale dans une première partie ou est formé de deux orifices de passage (5) circulaires partiellement superposés et de sorte qu'il se poursuive un peu plus loin lors de l'écoulement dans l'élément de filtration (7) par une deuxième partie de l'orifice de passage (5) qui a la forme d'un canal circulaire (30).

15. Dispositif selon l'une des revendications précédentes, **caractérisé en ce que** le boîtier (21) ne présente qu'un seul canal d'entrée (1), un seul canal de sortie, un seul orifice cylindrique (3) pour recevoir un seul axe (4, 4a) que l'on peut déplacer dans le sens de la longueur, l'axe ne possédant qu'un orifice de passage (5) unique pour la réception d'un seul élément de filtration (7).

16. Dispositif selon l'une des revendications 1 à 14, **caractérisé en ce que** l'axe (4, 4a) cylindrique se trouve muni de deux orifices de passage agencés avec un espace axial entre eux, éventuellement pour la réception d'un élément de filtration (7), dans lequel la matière synthétique fondue à filtrer traverse, dans une première position de l'axe, les bougies de filtration (6) de deux éléments de filtration (7), et dans une deuxième position de l'axe (4, 4a), les bougies de filtration (6) d'un élément de filtration (7)sont traversées par la matière synthétique fondue à filtrer, tandis que les bougies de filtration (6) de l'autre élément de filtration (7) se trouvent dans une position externe au boîtier (21) du dispositif (20), et de sorte que l'axe (4, 4a) se trouve mobile sur sa longueur d'une première position à une seconde position, et inversement.

17. Dispositif selon l'une des revendications 1 à 14, **caractérisé en ce que** le dispositif (20) présente au moins deux axes (4, 4a) mobiles agencés axialement à l'intérieur d'un boîtier (21), axes munis éventuellement d'au moins deux éléments de filtration (7) agencés avec un espace axial entre eux, dans lequel la matière synthétique fondue à filtrer traverse, dans une première position de l'axe (4, 4a), les bougies de filtration (6) de tous les éléments de filtration (7), et dans une deuxième position de l'un des deux axes, au moins un élément de filtration (7) se trouve dans une position externe au boîtier (21) du dispositif (20), tandis que les bougies de filtration (6) des autres éléments de filtration (7) restants sont traversées par la matière synthétique fondue à filtrer, et de sorte que les axes (4, 4a) en première position se trouvent déplacés en deuxième position, et inversement.

18. Dispositif selon l'une des revendications 1 à 14, **caractérisé en ce qu'**au moins l'un des axes cylindriques (4, 4a) est muni de deux orifices de passage (5) séparés par un espace axial, éventuellement pour l'admission d'un élément de filtration (7), où, dans une première position de l'axe (4, 4a), les bougies de filtration (6) des deux éléments de filtration (7) sont traversées par le matériau synthétique fondu à filtrer, et dans une deuxième position d'au moins l'un des axes (4, 4a), les bougies de filtration (6) de l'un des éléments de filtration (7) sont traversées par la matière synthétique à filtrer, tandis que simultanément, les bougies de filtration (6) de l'autre élément de filtration (7) sont rejetées avec le matériau synthétique filtré, de sorte qu'un canal d'évacuation ouvert à l'atmosphère est créé dans le boîtier (21), ce canal est fermé lors de la première position de l'axe (4, 4a), et ouvert à l'atmosphère lors de la deuxième position de l'axe, et de sorte que l'axe se trouve mobile de la première position à la deuxième position, et inversement.
